# EUROPEAN PATENT SPECIFICATION

(11) **EP 3 490 367 B1**
(45) Date of publication and mention of the grant of the patent: **22.12.2021**
(21) Application number: 17834844.7
(22) Date of filing: 24.07.2017
(51) Int. Cl.: A01K 1/10

(54) **FEEDING DEVICE FOR CATTLE AND SMALL LIVESTOCK**
FÜTTERVORRICHTUNG FÜR VIEH UND KLEINE NUTZTIERE
DISPOSITIF D'ALIMENTATION POUR BÉTAIL ET PETIT BÉTAIL

(30) Priority: 29.07.2016 NO 20161249
(43) Date of publication of application: 05.06.2019
(73) Proprietor: Byberg, Egil, 4110 Forsand (NO)
(72) Inventor: Byberg, Egil, 4110 Forsand (NO)
(74) Representative: Håmsø Patentbyrå AS
(86) International application number: PCT/NO2017/050199
(87) International publication number: WO 2018/021918

(56) References cited:
- WO-A1-01/67851
- DK-U3- 9 400 276
- DK-U3- 9 400 276
- GB-A- 2 533 588
- US-A1- 2010 116 218
- US-A1- 2010 116 218
- US-A1- 2014 116 342
- US-B1- 8 065 976

## Description

The invention relates to a feeding device for cattle and small livestock for fixed location use.

### Background of the invention

For a long time, it has been common to use different types of cribs when dispensing coarse fodder to cattle and small livestock. A standard crib consists of a raised portion / front wall at the end where the animal stands eating. Then there is a tight feed table and a higher back wall. The purpose of a crib is to make the fodder accessible to the animal without the animal being able to tread on or dirty the fodder. By means of the high back wall, the fodder will stay in a limited area so that the animal can reach all the fodder at any time. The latter is probably the most important function of a crib, as both cattle and small livestock often throw the fodder forwards and away from themselves.

In recent time, the dispensing of coarse fodder has become considerably mechanized. A method much used for dispensing coarse fodder is a tractor with a trailed mixer wagon or / feeding wagon or a self-propelled feeding machine. To dispense coarse fodder into a crib with a high back wall, a relatively high and long elevator is required on the feeding machine. It is also challenging to mechanically clean the inside of a crib of fodder remnants, as the high back wall and the design of the crib require specially adapted implements. It is therefore common to build a drive-through feeding alley, wherein a tractor is driven on the feeding alley when coarse fodder is being dispensed. Mechanical cleaning of fodder remnants can easily be carried out with the use of a tractor with a blade mounted thereon, for example. A drawback of drive-through alley feed tables is that the fodder may easily become contaminated by impurities on the tractor wheels. There is no back wall preventing the animals from throwing the fodder away from themselves, either. The fodder will therefore have to be pushed up to the animals again at regular intervals. This is carried out manually or mechanically, for example with a tractor or a robotic feed pusher. Another drawback of drive-through feeding alley is that to protect the fodder from the weather, a roof must be built over it. More often than not, the drive-through feeding alley are placed inside the livestock room and normally have a width of 3-5 metres over the entire length of the building. The drive-through feeding alley thereby takes up a large and costly area in the building.

One way of preventing the fodder from being exposed to the weather, without having to drive with the feeding machine inside the building, is known from patents WO 01/67851 and US8220414 B2. Here, fixed cribs are used with a movable wall in the extension of the back wall. Patent publication GB 2533588 A discloses a pivotable hatch in the external wall which prevents access by the animals to the feed table when fodder is being dispensed and which is pivoted in such a way that it shields fodder and animals from the weather when the animals are eating. US2014116342 discloses a feeding device with a movable structure.

### Description of the invention

The invention has for its object to remedy or reduce at least one of the drawbacks of the prior art or at least provide a useful alternative to the prior art.

The object is achieved through a feeding device according to claim 1.

The invention relates to a feeding device suitable for cattle and small livestock for fixed location use, the feeding device comprising a feeding table and a loading and closing, the loading and closing member extending along an outer portion of the feeding table and being pivotably attached to the feeding table between a swung-down first position and a swung-up second position for providing a back wall for the feeding table. The feeding device may stand alone or be connected to a wall in a livestock room.

The feeding table may include an eating front to prevent the animals from walking on the feed table.

In the swung-up position, the loading and closing member can prevent the animals from throwing the fodder away from themselves. By a swung-up position may be understood a position which is so steep that the fodder will fall onto the feeding table.

The feeding device may include a longitudinal elastic lip member. The elastic lip member is arranged to abut against an overlying building structure when the loading and closing member has substantially a vertical position, thereby being able to shut out the weather.

In a swung-down first position, the loading and closing member forms an extension of the feeding table. This enables fodder to be loaded from the outside of the building, and thereby a possibility of saving a considerable building area. There is also a considerable saving in time and/or money in not having to push the fodder up to the animals. The solution eliminates the need for a long and high elevator on the feeding machine, which is essential if the feed table is provided with a back wall as described in said patent publications WO 01/67851 and US8220414 B2.

In addition, the invention enables easy mechanical cleaning of the feed table with a laterally facing blade mounted on a tractor. The tractor and feeding machine run at the side of the loading and closing member. In that way, contamination from wheels to fodder is avoided.

The feeding device may include a member in cloth form which is attached, at one end portion, to the loading and closing member and is attached, at its other end portion, to a base. When the loading and closing member is in its swung-up position, the cloth will be tautened between the outer portion of the loading and closing member and the base and prevent snow and possible foreign bodies from landing within the working area of the device. When the loading and closing member is in its swung-down position, the cloth will lie in folds under the loading and closing member.

The outer portion of the loading and closing member may include a longitudinal alignment edge for a feeding machine running on wheels. The alignment edge makes it possible for the wheel of the tractor or the feeding wagon to abut against the closing member without the wheel or the loading and closing member being damaged.

The feeding table may be formed of concrete or as a metal structure. In an advantageous embodiment, the distance from the inner portion of the feeding table to the outer portion of the feeding table is adapted for the relevant animal species, so that the animals can reach all the fodder.

The loading and closing member may include a frame structure, and the frame structure of the loading and closing member may comprise one or more sections. In an advantageous embodiment, the sections are modular.

Over the frame structure, on the working side of the loading and closing member, a material which is tight and easily cleanable may be extended. The material may be elastic, for example a cloth. In alternative embodiments, the extended material may comprise steel, aluminium or plastic.

In its longitudinal end portion, the elastic material may be provided with a transition portion covering a hinge portion arranged between the feeding table and the loading and closing member. In an advantageous embodiment, the transition portion is an elastic material.

At its idle side, the loading and closing member may be provided with an attachment member for an actuator arranged to pivot the loading and closing member from substantially a horizontal position to substantially a vertical position. The actuator may be an underlying mechanism including a hydraulic or pneumatic cylinder, an electric actuator or a jackscrew. The lifting mechanism may be placed in a recessed space in the feed table and is pivotably attached at its end portion to an attachment member on the inner portion of the feed table and an attachment member on the idle side of the loading and closing member.

The feeding device may include remote control of the movement of the loading and closing member.

Maybe the most economic advantage of the invention is that when used in an animal house, it may be installed along the outer wall of the animal house, thereby reducing the ground area of the building.

In what follows, examples of preferred embodiments are described, which are visualized in the accompanying drawings, in which:
- Figure 1: shows a cross section of a free-standing feeding device;
- Figure 2: shows a loading and closing member in a horizontal position;
- Figure 3: shows a loading and closing member in a vertical position;
- Figure 4: shows a feeding device arranged along an outer wall;
- Figure 5: shows a loading and closing member with a cloth in the horizontal position;
- Figure 6: shows a loading and closing member with a cloth in the vertical position;
- Figure 7: shows a feeding device when fodder is being deposited on it from a fodder wagon running on wheels;
- Figure 8: shows a feeding device in the feeding position;
- Figure 9: shows the loading and closing member placed on a drive-through alley feed table; and
- Figure 10: shows an alternative embodiment of the loading and closing member.

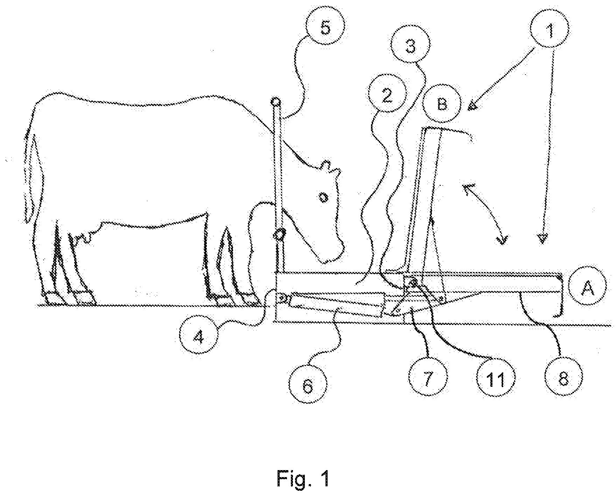

Figure 1 shows an exemplary embodiment in which the feeding device is a free-standing one. The feeding table 2 is a concrete structure with recesses for a hydraulic cylinder 6. The cylinder 6 is pivotably attached, at one end portion, to the inner portion 4 of the feeding table 2 and pivotably attached, at its other end portion, to an attachment member 7 on the idle side 8 of a loading and closing member 1. An eating front 5 prevents the animals from trampling on the feed table 2. By changing the stroke length of the cylinder 6, the loading and closing member 1 may rotate around the hinge portion 11 between a swung-down first position A and a swung-up second position B.

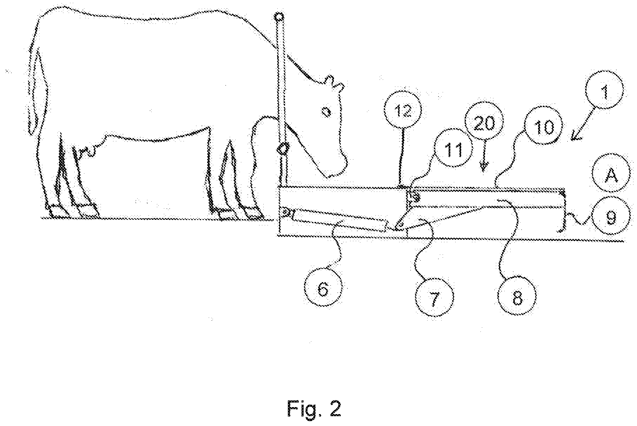

Figure 2 shows the loading and closing member 1 in a swung-down first position A, ready to receive fodder. On its working side 20, the frame 8 of the loading and closing member is provided with a strong cloth 10 which, at one end portion, is provided with a transition portion 12 which prevents fodder and foreign bodies from falling onto the hinge portion 11.

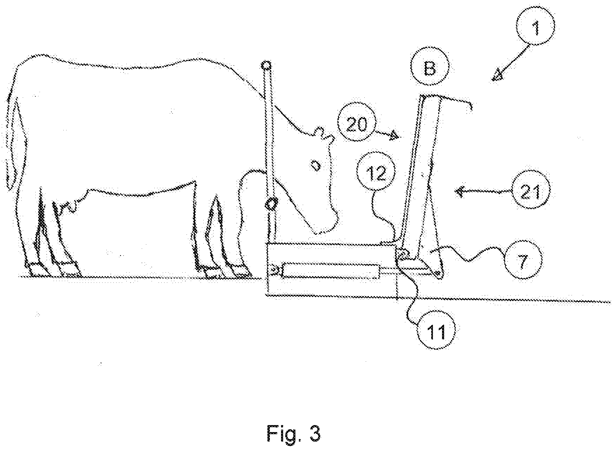

Figure 3 shows the loading and closing member 1 in a swung-up second position B.

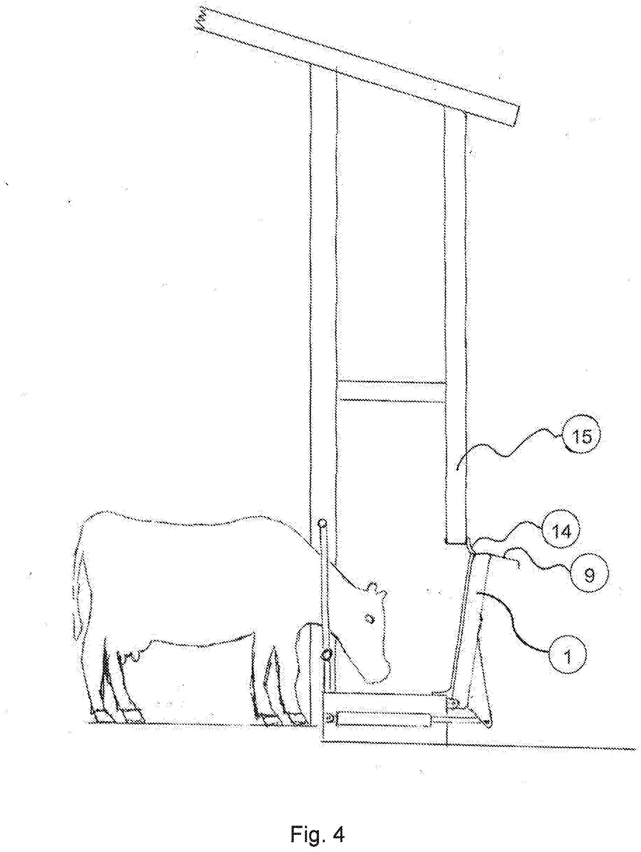

Figure 4 shows an exemplary embodiment in which the feeding device is arranged along an outer wall 15. Along the outer portion 9 of the loading and closing member 1, a longitudinal elastic lip member 14 is attached. In the swung-up position, the lip member 14 may form a tight connection between the loading and closing member 1 and the wall 15 so that the building becomes tight to wind and rain.

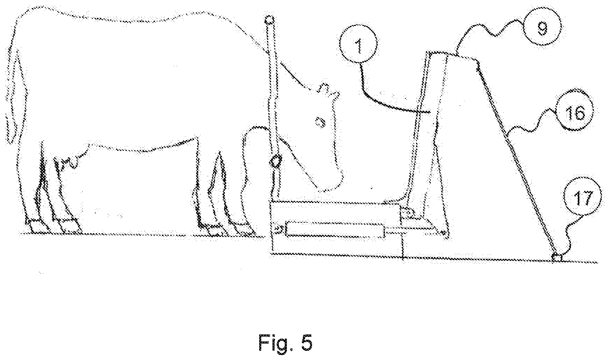

Figure 5 shows how a flexible cloth 16 is attached, at one end portion, to the outer portion 9 of the loading and closing member 1 and is attached, at its other end portion, to the base 17. The cloth 16 has for its purpose to prevent snow and foreign bodies from landing within the working area of the feeding device.

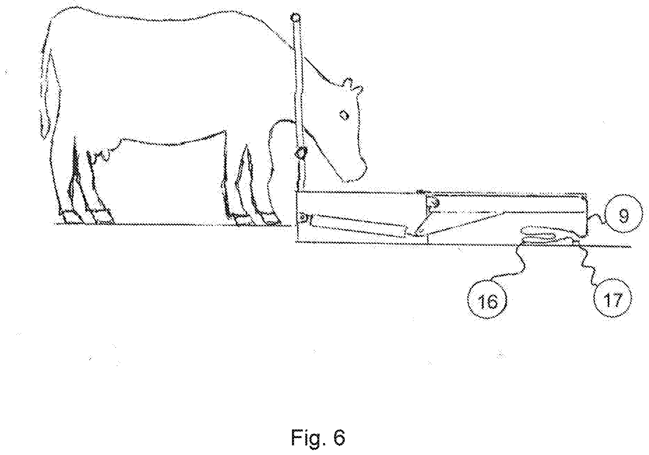

Figure 6 shows how a flexible cloth 16 is folded up when the loading and closing member 1 is in the horizontal position.

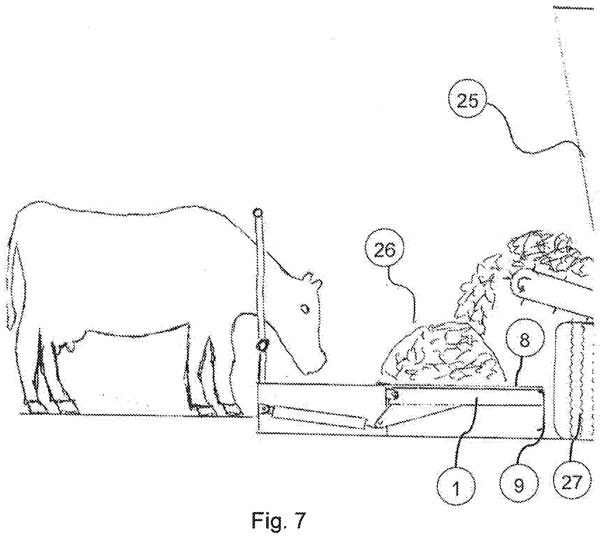

Figure 7 shows a feeding wagon 25 running on wheels, feeding out fodder 26 onto the working side 8 of the loading and closing member 1. The end portion 9 also functions as an alignment edge for the wheels not to damage the loading and closing member 1.

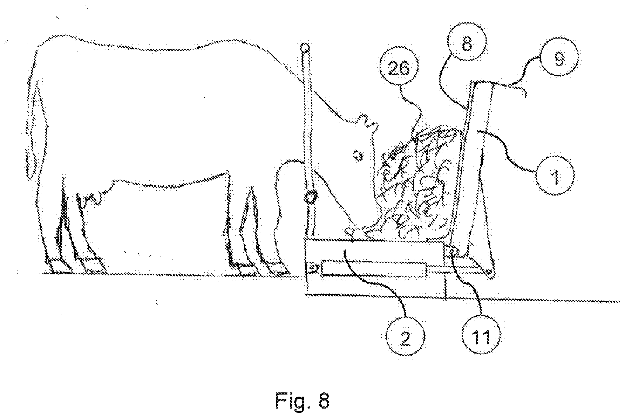

Figure 8 shows the loading and closing member 1 in a vertical position with fodder 26. By raising the loading and closing member 1 from a horizontal position into a vertical position, the fodder 26 will slide down along the working side 8 so that it becomes accessible to the animals. At the same time, a back wall is formed for the feeding table 2, preventing the animals from throwing the fodder off the feeding table. The length of the loading and closing member 1 from the hinge portion 11 to the outer portion 9 is so long that the animals cannot throw the fodder 26 over the outer portion 9 when the loading and closing member 1 is in the swung-up position.

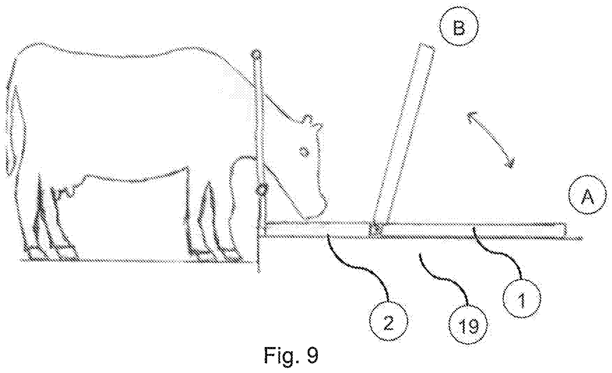

Figure 9 shows the loading and closing member 1 placed on a drive-through feeding alley, wherein, in the swung-down first position A, the loading and closing member 1 is resting against a base 19, typically a poured floor. In the swung-down first position A, a tractor and a fodder wagon 25 running on wheels (see figure 7) may run on the loading and closing member 1 during feeding. The figure shows the feeding table 2 placed on top of the base 19, and the base 19 includes a recess for a hydraulic cylinder 6, as indicated in figures 1-8. The feed table 2 may constitute a portion of the base 19.

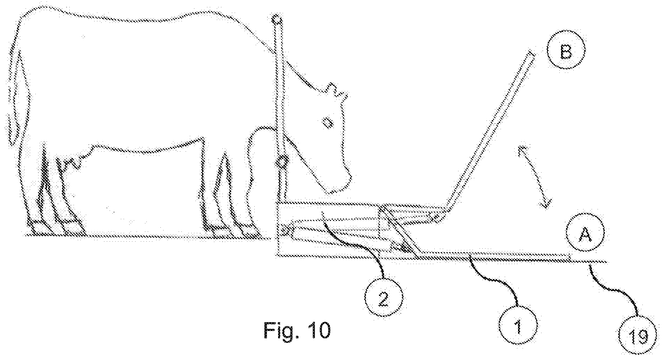

Figure 10 shows an alternative embodiment of the invention, in which the loading and closing member 1 is L-shaped. The solution makes it possible for the loading and closing member 1 in the swung-down first position A to rest against the base 19 when the feed table 2 is higher than the base 19. It should be noted that all the above-mentioned embodiments illustrate the invention, but do not restrict it, and persons skilled in the art may form many alternative embodiments without departing from the scope of the attached claims. In the claims, reference numbers in brackets are not to be considered as restrictive.

The use of the verb "to comprise" and its different forms does not exclude the presence of elements or steps that are not mentioned in the claims. The indefinite article "a" or "an" before an element does not exclude the presence of several such elements. The fact that some features are indicated in mutually different dependent claims does not indicate that a combination of these features cannot be used with advantage.

## Claims

1. A feeding device for cattle and small livestock for fixed location use, the feeding device including a feeding table (2) and a loading and closing member (1), **characterized in that** the loading and closing member is pivotably attached to the outer portion (3) of the feeding table (2) and the loading and closing member (1) is pivotable between a swung-down first position (A) and a swung-up second position (B) for providing a back wall for the feeding table.

2. The feeding device as claimed in claim 1, wherein a longitudinal elastic lip member (14) is attached to the outer portion (9) of the loading and closing member (1).

3. The feeding device as claimed in claim 2, wherein, in the vertical position of the loading and closing member (1), the lip member (14) is arranged to abut against an overlying building structure (15).

4. The feeding device as claimed in one or more of the preceding claims,
wherein a member (16) in cloth form is attached, at one end portion, to the outer portion (9) of the loading and closing member (1) and is attached, at its other end portion, to a base (17).

5. The feeding device as claimed in one or more of the preceding claims,
wherein the outer portion (9) of the loading and closing member (1) is provided with a longitudinal alignment edge.

6. The feeding device as claimed in one or more of the preceding claims,
wherein the feeding table (2) is formed from concrete or as a metal structure.

7. The feeding device as claimed in one or more of the preceding claims,
wherein the loading and closing member (1) comprises a frame structure (8).

8. The feeding device as claimed in claim 7, wherein an elastic material (10) is extended over the frame structure (8).

9. The feeding device as claimed in claim 8, wherein, at its longitudinal end portion facing the feed table (2), the elastic material (10) is provided with a transition portion (12) covering a hinge portion (11).

10. The feeding device as claimed in one or more of the preceding claims, wherein, at its idle side (21), the loading and closing member (1) is provided with an attachment member (7) for an actuator (6).

11. The feeding device as claimed in one or more of the preceding claims, wherein the loading and closing member (1) is formed from one or more sections.

12. The feeding device as claimed in one or more of the preceding claims, wherein the movement of the loading and closing member (1) can be remote-controlled.

## Patentansprüche

1. Futtervorrichtung für Rinder und Kleinvieh, zur Verwendung an einem festen Standort, wobei die Futtervorrichtung einen Futtertisch (2) und ein Lade- und Schliesselement (1) aufweist, **dadurch gekennzeichnet, dass** das Lade- und Schliesselement schwenkbar an dem Aussenbereich (3) des Futtertisches (2) befestigt ist und dass das Lade- und Schliesselement (1) schwenkbar ist zwischen einer heruntergeschwenkten ersten Position (A) und einer heraufgeschwenkten zweiten Position (B) zur Bereitstellung einer Rückwand für den Futtertisch.

2. Futtervorrichtung gemäss Anspruch 1, wobei ein längliches elastisches Lippenelement (14) am Aussenbereich (9) des Lade- und Schliesselements (1) befestigt ist.

3. Futtervorrichtung gemäss Anspruch 2, wobei in der vertikalen Position des Lade- und Schliesselements (1) das Lippenelement (14) derart angeordnet ist, dass es gegen eine überlagernde Gebäudestruktur (15) anliegt.

4. Futtervorrichtung gemäss einem oder mehrerer der vorhergehenden Ansprüche, wobei ein gewebeförmiges Element (16) an einem Endbereich am Aussenbereich (9) des Lade- und Schliesselements (1) befestigt ist, und an seinem anderen Endbereich an einer Basis (17) befestigt ist.

5. Futtervorrichtung gemäss einem oder mehrerer der vorhergehenden Ansprüche, wobei der Aussenbereich (9) des Lade- oder Schliesselements (1) eine längliche Ausrichtungskante aufweist.

6. Futtervorrichtung gemäss einem oder mehrerer der vorhergehenden Ansprüche, wobei der Futtertisch (2) aus Beton oder als eine Metallstruktur ausgebildet ist.

7. Futtervorrichtung gemäss einem oder mehrerer der vorhergehenden Ansprüche, wobei das Lade- und Schliessglied (1) eine Rahmenstruktur (8) aufweist.

8. Futtervorrichtung gemäss Anspruch 7, wobei sich ein elastisches Material (10) überdie Rahmenstruktur (8) erstreckt.

9. Futtervorrichtung gemäss Anspruch 8, wobei das elastische Material (10) an seinem länglichen Endberich, welcher dem Futtertisch (2) zugewandt ist, einen Übergangsbereich (12) aufweist, welcher einen Scharnierbereich (11) bedeckt.

10. Futtervorrichtung gemäss einem oder mehrerer der vorhergehenden Ansprüche, wobei das Lade- und Schliesselement (1) an seiner freien Seite (21) ein Befestigungselement (7) für einen Antrieb (6) aufweist.

11. Futtervorrichtung gemäss einem oder mehrerer der vorhergehenden Ansprüche, wobei das Lade- und Schliesselement (1) aus einem oder mehreren Abschnitten ausgebildet ist.

12. Futtervorrichtung gemäss einem oder mehrerer der vorhergehenden Ansprüche, wobei die Bewegung des Lade- und Schliesselements (1) fernsteuerbar ist.

## Revendications

1. Un dispositif d'alimentation pour bétail et petit bétail pour l'utilisation dans un emplacement fixe, le dispositif d'alimentation comprenant une table d'alimentation (2) et un élément de chargement et de fermeture (1), **caractérisé en ce que** l'élément de chargement et de fermeture est fixé de manière pivotante à la partie extérieure (3) de la table d'alimentation (2) et l'élément de chargement et de fermeture (1) peut pivoter entre une première position basculée vers le bas (A) et une seconde position basculée vers le haut (B) afin de produire une paroi arrière pour la table d'alimentation.

2. Le dispositif d'alimentation comme revendiqué dans la revendication 1, dans lequel un élément de lèvre élastique longitudinal (14) est fixé à la partie extérieure (9) de l'élément de chargement et de fermeture (1).

3. Le dispositif d'alimentation comme revendiqué dans la revendication 2, dans lequel, dans la position verticale de l'élément de chargement et de fermeture (1), l'élément de lèvre (14) est agencé pour venir en butée contre une structure de construction sus-jacente (15).

4. Le dispositif d'alimentation comme revendiqué dans une ou plusieurs des revendications précédentes, dans lequel un élément (16) sous forme de tissu est attaché, à une partie d'extrémité, à la partie extérieure (9) de l'élément de chargement et de fermeture (1) et est attaché, à son autre partie d'extrémité, à une base (17).

5. Le dispositif d'alimentation comme revendiqué dans une ou plusieurs des revendications précédentes, dans lequel la partie extérieure (9) de l'élément de chargement et de fermeture (1) est munie d'un bord d'alignement longitudinal.

6. Le dispositif d'alimentation comme revendiqué dans une ou plusieurs des revendications précédentes, dans lequel la table d'alimentation (2) est formée de béton ou d'une structure métallique.

7. Le dispositif d'alimentation comme revendiqué dans une ou plusieurs des revendications précédentes, dans lequel l'élément de chargement et de fermeture (1) comprend une structure de cadre (8).

8. Le dispositif d'alimentation comme revendiqué dans la revendication 7, dans lequel un matériau élastique (10) s'étend à travers la structure de cadre (8).

9. Le dispositif d'alimentation comme revendiqué dans la revendication 8, dans lequel, au niveau de sa partie d'extrémité longitudinale tournée vers la table d'alimentation (2), le matériau élastique (10) est pourvu d'une partie de transition (12) recouvrant une partie charnière (11).

10. Le dispositif d'alimentation comme revendiqué dans une ou plusieurs des revendications précédentes, dans lequel, sur son côté libre (21), l'élément de chargement et de fermeture (1) est pourvu d'un élément de fixation (7) pour un actionneur (6).

11. Le dispositif d'alimentation comme revendiqué dans une ou plusieurs des revendications précédentes, dans lequel l'élément de chargement et de fermeture (1) est formé d'une ou plusieurs sections.

12. Le dispositif d'alimentation comme revendiqué dans une ou plusieurs des revendications précédentes, dans lequel le mouvement de l'élément de chargement et de fermeture (1) peut être commandé à distance.
